Europäisches Patentamt

European Patent Office

Office européen des brevets

(11) Publication number: **0 371 526**
**A1**

# EUROPEAN PATENT APPLICATION

(21) Application number: **89202746.7**

(51) Int. Cl.⁵: **C01B 3/16, B01J 23/80**

(22) Date of filing: **31.10.89**

(30) Priority: **14.11.88 US 270771**

(43) Date of publication of application:
**06.06.90 Bulletin 90/23**

(84) Designated Contracting States:
**BE DE FR GB**

(71) Applicant: **CATALYSTS AND CHEMICALS EUROPE S.A.**
**Place du Champ de Mars 2**
**B-1050 Bruxelles(BE)**

(72) Inventor: **Ray, John A.**
**310 West Catherine Street**
**Louisville, KY 40203(US)**
Inventor: **Huang, Dinah C.**
**7100 Cove Pointe Place**
**Prospect, KY 40059(US)**
Inventor: **Dienes, Edward K.**
**2228 Bonnycastle Avenue**
**Louisville, KY 40205(US)**

(74) Representative: **Schmitz, Yvon et al**
**Bureau Gevers S.A. rue de Livourne 7 bte 1**
**B-1050 Bruxelles(BE)**

(54) **Low temperature shift catalyst.**

(57) An improved catalyst for the low temperature water gas shift reaction especially suited for use with feed gases contaminated with chlorides is made by modifying a copper-zinc-alumina catalyst with barium carbonate.

EP 0 371 526 A1

## Low temperature shift catalyst

Background of Invention

The field of art to which this invention pertains is catalysts for the low temperature shift reaction.

Hydrogen production from carbon monoxide and steam has for decades been one of the most important processes of the chemical industry. This reaction

$$CO + H_2O \rightleftharpoons H_2 + CO_2$$

is commonly known as the water gas shift reaction which term was derived from 19th century generation of water gas which was manufactured by passing steam over hot coal to produce a mixture of carbon monoxide and hydrogen. The conversion of carbon monoxide by this reaction is favored by lower temperatures and the reaction is slightly exothermic.

While lower temperatures favor more complete carbon monoxide conversion, higher temperatures allow recovery of the heat of reaction at a sufficient temperature level to generate high pressure steam. For maximum efficiency and economy of operation, many plants contain a high temperature shift reaction unit for bulk carbon monoxide conversion and heat recovery, and a low temperature shift reaction unit for final carbon monoxide conversion.

The high temperature shift reaction is generally conducted at a temperature range of about $600^\circ$ - $950^\circ$ F using iron-chrome catalysts. The low temperature shift reaction is generally conducted at a temperature range of about $350^\circ$ - $550^\circ$ F using copper-zinc catalysts.

Copper oxide - zinc oxide - alumina - type low temperature shift reaction catalysts are well known compositions and are described in such patents as U.S. 3,388,972 and U.S. 4,460,704.

The copper based shift catalysts are very sensitive to even minute concentrations of chloride which are sometimes present in the low temperature shift reactor feed gas. Chloride poisons the catalyst by enhancing growth of the copper crystals, thereby reducing the active surface area. Chloride migrates through an unprotected catalyst bed lowering and eventually destroying the activity of the catalyst.

U.S. Patent N˚ 3,922,337 describes a low temperature shift reaction which involves contacting a stream containing carbon monoxide with steam over a solid material which is more basic than zinc oxide and then over the low temperature shift catalyst. The compounds which are more basic than zinc oxide are basic compounds of elements of Group IA or IIA. These compounds can be supported on a catalyst carrier material and can be disposed in a guard bed upstream of the low temperature shift catalyst. The basic compounds can also be mixed with the low temperature shift catalysts.

In U.S. Patent N˚ 4,257,920, shift reaction catalysts are made from zinc, copper, and rare earth compounds plus aluminous cement which is described as containing calcium oxide, barium oxide and alumina.

A chlorine resistant shift gas catalyst is described in U.S. Patent N˚ 4,683,218. This catalyst contains copper, zinc a rare earth element and alkaline earth element.

There is a continuing need for industrial catalysts which have improved activity retention in the presence of process gas impurities.

Summary of the Invention

This invention is directed to catalysts for the low temperature shift reaction. In particular, this invention pertains to a low temperature shift catalyst which retains its activity in the presence of chloride impurities.

The low temperature shift catalyst of this invention contains copper oxide, zinc oxide and alumina plus barium carbonate in the amount of about 1 to about 20 weight percent based on the weight of the catalyst.

Description of the Invention

The low temperature shift catalyst of this invention is basically a copper-zinc-alumina catalyst modified with barium carbonate. The catalyst contains about 25 to about 50 weight percent copper oxide, about 25 to about 55 weight percent zinc oxide, about 5 to about 30 weight percent alumina and about 1 about 20 weight percent barium carbonate. Preferably, the catalyst contains about 35 to about 45 weight percent copper oxide, about 35 to about 45 weight percent zinc oxide, about 5 to about 15 weight percent alumina, and about 5 to 15 weight percent barium carbonate. The catalyst can also contain minor amounts of other components, such as up to about 3 weight percent carbon in the form of graphite. The above weight percents are based on the total weight of the catalyst.

The low temperature shift catalyst of this invention can be made by co-precipitating the precursors of copper and zinc oxides and barium carbonate from a solution of copper amine carbonate, zinc amine carbonate and barium hydroxide in an aqueous slurry of alumina at 212° F, filtering and drying the filter cake at a temperature of 350 - 450° F. The dried cake is then calcined at 500 - 600° F and the calcined powder is tabletted.

Alternatively, the precursors of copper and zinc oxide in the catalyst can be coprecipitated from a solution of copper and zinc amine carbonate in an aqueous slurry of alumina, filtered, dried and calcined as described hereinabove. The resulting particles are then slurried in water with barium hydroxide and additional alumina if desired. Carbon dioxide is bubbled through the slurry solution to convert the barium hydroxide to barium carbonate. The resulting slurry is then spray dried and the spray dried product is tabletted.

Variations in the above described procedures, which would be apparent to those skilled in the art, can be used to prepare the catalysts of this invention.

The low temperature shift catalyst of this invention has a long effective life at high CO conversions in the presence of chloride contaminants. The catalyst has not only high initial activity but also exhibits good retention of low temperature shift activity in the presence of chlorides. The catalyst also has a high capacity to pick up chlorides, i.e., to screen chlorides from the feed gases, thus protecting the active catalyst beneath it.

The following examples describe the invention in more detail. Percentages and parts are by weight unless otherwise indicated.

## Example 1

To a suitable reactor were added 67.93 parts of copper amine carbonate, 75.56 part of zinc amine carbonate and 600 parts of water. When solution was obtained, 30 parts of alumina and 86.8 parts of barium hydroxide were added. Heat to 212° F was applied to decompose the metal amine carbonates and to precipitate the metal salts. After about 2 hours heating, the reactants were filtered and the filter cake was dried at 350° - 440° F for 6 hours and was then calcined at 550° F followed by tabletting. The resulting catalyst contained 28.2% copper oxide, 31.8% zinc oxide, 30.0% alumina and 10.0% barium carbonate.

## Example 2

To a suitable reactor were added 70 parts of a mixture consisting of 29.6% copper oxide, 33.4% zinc oxide and 7.0% alumina prepared using the procedure described in Example 1 (without barium). Water, 200 parts, barium hydroxide, 8.68 parts, and alumina, 20 parts, were added. Carbon dioxide gas was bubbled through the slurry to precipitate barium carbonate. The slurry was then spray dried and the dried particles were tabletted. The resulting catalyst contained 29.6% copper oxide, 33.4% zinc oxide, 27.0 alumina, and 10% barium carbonate.

## Example 3

This catalyst was made using the same procedure as Example 1 except barium carbonate was used initially rather than barium hydroxide. The catalyst contained 28.2% copper oxide, 31.8% zinc oxide, 30.0% alumina, and 10.0% barium carbonate.

## Example 4

This catalyst was prepared using the procedure described in Example 1 except carbon dioxide gas was bubbled through the slurry prior to spray drying. The catalyst contained 28.2% copper oxide, 31.8% zinc oxide, 30.0% alumina, and 10.0% barium carbonate.

## Example 5

This catalyst was made using the procedure described in Example 2. The catalyst contained 37.6% copper oxide, 42.4% zinc oxide, 10.0% alumina, and 10% barium carbonate.

## Example 6

This catalyst was prepared by bubbling carbon dioxide through barium hydroxide solution, then adding alumina and the mixture of copper oxide (29.6%), zinc oxide, 33.4% and alumina (7.0%) described in Example 2. After mixing, filtering and drying at 300° F, the components were tabletted. The catalyst contained 29.6% copper oxide, 33.4% zinc oxide, 27.0% alumina and 10% barium carbonate.

## Example 7

Each of the catalysts described in the above examples was evaluated for low temperature shift activity and chloride resistance. Each of the catalysts, 20 cc, was loaded into a glass lined reactor, 1 inch inner diameter, and was reduced at 400° F and 50 psig with 3% hydrogen in nitrogen at 1000 hr-SV overnight. The catalysts were then tested at the following test conditions :

| | |
|---|---|
| Pressure | 50 psig |
| Temperature | 408° F |
| Feed Gas Composition | 3.18% CO |
| | 15.57% $CO_2$ |
| | 60.14% $H_2$ |
| | 21.11% $N_2$ |
| Wet Gas HCl Conc. | 10 ppm mol |
| S/G (Steam to Gas) | 0.435 |
| WGSV | 16,000 L/L/Hr. |
| Duration : | |
| Phase I | |
| No Cl in Feed | 1-2 days |
| Phase II | |
| 33 ppm mol Cl in feed water | 3 days |

The activity of the catalysts ($K_w$), the % CO conversion with no Cl in feed and with Cl in feed and the amount of Cl picked up by the catalyst at the inlet half of the catalyst bed and at the exit half of the catalyst bed are recorded in the Table. Example X is a low temperature shift catalyst with 43.4% copper oxide, 45.5% zinc oxide, and 10.9% alumina with no barium.

4

## Table 1

| Example | 1 | 2 | 3 | 4 |
|---|---|---|---|---|
| Standard Activity $K_w$ | 17,910 | 12,940 | 15,940 | 17,840 |
| Phase I | | | | |
| % CO Conversion | | | | |
| 1 day | | | 74,9 | 76,8 |
| 2 days | 65,9 | 63,1 | | |
| Phase II | | | | |
| % CO Conversion | | | | |
| 1 day | 62,9 | 58,9 | 63,4 | 70,7 |
| 2 days | 53,6 | 44,7 | | |
| 3 days | 44,0 | 39,0 | 44,2 | 47,4 |
| Wt % Cl of Discharged Catalyst | | | | |
| Bed Inlet | 2,85 | 2,63 | 2,13 | 2,92 |
| Bed Exit | 0,74 | 0,61 | 0,57 | 0,61 |
| CBD (lbs/CF of Fresh Catalyst) | 67 | 78 | 68 | 59 |

## Table 1 (continued)

| Example | 5 | 6 | X |
|---|---|---|---|
| Standard | 18,690 | 14,950 | 23,000 |
| Activity $K_w$ | | | |
| Phase I | | | |
| % CO Conversion | | | |
| 1 day | 80,8 | 63,8 | 79,2 |
| 2 days | | 55,5 | 78,2 |
| Phase II | | | |
| % CO Conversion | | | |
| 1 day | 74,4 | 46,9 | 62,2 |
| 2 days | 64,6 | 44,6 | 35,2 |
| 3 days | 58,2 | 36,2 | 4,4 |
| Wt % Cl of | | | |
| Discharged Catalyst | | | |
| Bed Inlet | 2,45 | 2,09 | 1,16 |
| Bed Exit | 0,40 | 0,46 | 0,59 |
| CBD (lbs/CF of | 80,5 | 79 | 80 |
| Fresh Catalyst) | | | |

## Example 8

Using the same procedures and conditions described in Example 7, a catalyst of this invention, Example 5, was compared with the low temperature shift catalyst which contained no barium Example X, and a commercial low temperature shift chloride guard catalyst. The data obtained after 4 days testing are listed in Table 2.

Table 2

| Catalyst | Ex 5 | Ex X | Com. |
|---|---|---|---|
| Used catalyst Chloride Pickup | | | |
| Wt % Cl (used catalyst) | 2,0 | 1,1 | 1,4 |
| Lbs Cl/CF (fresh catalyst basis) | 1,66 | 0,9 | 0,9 |
| Final % CO conversion (after 3 days under Cl containing steam) | 58,2 | 48,9 | 29,4 |

The catalysts of this invention can be used as the sole low temperature shift catalyst or they can be used in combination with conventional low temperature shift catalysts which contain no guards against chloride poisoning. In such combinations, the catalyst of this invention is loaded on top of the other catalyst so that the feed gases contact it first.

The principles, preferred embodiments, and modes of operation of the present invention have been described in the foregoing specification. The invention which is intended to be protected herein, however, is not bo be construed as limited to the particular forms disclosed, since they are to be regarded as illustrative rather than restrictive. Variations and changes may be made by those skilled in the art without departing from the spirit and scope of the invention.

## Claims

1. A low temperature water-gas shift reaction catalyst which comprises :
(a) about 25 to about 50 weight percent copper oxide;
(b) about 25 to about 55 weight percent zinc oxide;
(c) about 5 to about 30 weight percent alumina; and
(d) about 1 to about 20 weight percent barium carbonate.
Wherein said weight percents are based on the total weight of (a), (b), (c) and (d).

2. The catalyst of Claim 1 wherein the copper oxide is present in the amount of 35 to about 45 weight percent, the zinc oxide is present in the amount of about 35 to about 45 weight percent, the alumina is present in the amount of about 5 to about 15 weight percent and the barium carbonate is present in the amount of about 5 to about 15 weight percent.

3. In a hydrogen or ammonia manufacturing process involving the low temperature water gas shift reaction, wherein the feed gases contain chloride contamination, the improvement which comprises using a copper-zinc-alumina catalyst containing about 5 to about 25 weight percent barium carbonate.

4. The process of Claim 3 wherein the catalyst contains about 25 to about 50 weight percent copper oxide, about 25 to about 55 weight percent zinc oxide, about 5 to about 30 weight percent alumina and about 1 to about 20 weight percent barium carbonate.

5. The process of Claim 4 wherein the catalyst contains about 35 to about 45 weight percent copper oxide, about 35 to about 45 weight percent zinc oxide, about 5 to about 15 weight percent alumina and about 5 to about 15 weight percent barium carbonate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | US-A-3922337 (J.S. CAMPBELL ET AL.) * column 2, lines 53 - 60 * * claims 1-5 * | 1 | C01B3/16 B01J23/80 |
| A | US-A-4683218 (LYNN H. SLAUGH) | | |
| P,A | US-A-4801574 (DENNIS M. BROWN) | | |
| A | BE-A-683059 (CATALYSTS AND CHEMICALS) | | |
| A | CHEMICAL ABSTRACTS, vol. 71, no. 4, 28 July 1969 Columbus, Ohio, USA page 127; right-hand column; ref. no. 14728W &SU-A-218841(BUDNIKOV)3.2.1969 * abstract * | | |

TECHNICAL FIELDS SEARCHED (Int. Cl.5 )

C01B
B01J

The present search report has been drawn up for all claims

| Place of search | Date of completion of the search | Examiner |
|---|---|---|
| THE HAGUE | 20 MARCH 1990 | VAN BELLINGEN I. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document